# EUROPÄISCHE PATENTSCHRIFT

(11) **EP 1 050 557 B1**
(45) Veröffentlichungstag und Bekanntmachung des Hinweises auf die Patenterteilung: **31.03.2004**
(21) Anmeldenummer: 00106206.6
(22) Anmeldetag: 22.03.2000
(51) Int. Cl.: C08K 9/04, C08L 23/02, C08K 5/15

(54) **Thermoplaste und Thermoplastblends enthaltend modifizierte anorganische Schichtverbindungen und deren Verwendung**
Thermoplastic resins and blends thereof containing modified inorganic layered compounds and their utilisation
Résines thermoplastiques et mélanges contenant des composés inorganiques stratifiés modifiés et leur utilisation

(30) Priorität: 06.05.1999 DE 19920879
(43) Veröffentlichungstag der Anmeldung: 08.11.2000
(73) Patentinhaber: REHAU AG + Co, 95111 Rehau (DE)
(72) Erfinder: Rhönisch, Thomas, Dr., c/o REHAU AG + Co, 95111 Rehau (DE); Reichert, Peter, 79114 Freiburg (DE); Mühlhaupt, Rolf, Prof. Dr., 79117 Freiburg (DE)

(56) Entgegenhaltungen:
- EP-A- 0 669 368
- WO-A-93/04118
- WO-A-97/31053
- NL-C- 1 007 434
- PATENT ABSTRACTS OF JAPAN vol. 1999, no. 12, 29. Oktober 1999 (1999-10-29) -& JP 11 181277 A (SHOWA DENKO KK), 6. Juli 1999 (1999-07-06)

## Beschreibung

Die vorliegende Erfindung betrifft thermoplastisch verarbeitbare Polyolefine und durch lonenaustausch organophil modifizierte anorganische Füllstoffe enthaltende Polymergemische, die mindestens aus vier Komponenten zusammengesetzt sind.

In der Kunststofftechnik werden heute eine große Vielzahl von Füllstoffen eingesetzt, um die Kosten von Formmassen zu senken und die Eigenschaftsprofile von thermoplastischen polymeren Werkstoffen, insbesondere im Hinblick auf ihre mechanischen Eigenschaften, zu verbessern. Von besonderem Interesse, z.B. für den Einsatz von Kunststoffen als Werkstoffe für die Konstruktion und den Ersatz von metallischen und keramischen Werkstoffen, sind Füllstoffe, welche die Matrix des Kunststoffes verstärken. Diese Verstärkungswirkung manifestiert sich beispielsweise in erhöhten Elastizitäts- und Zugfestigkeitswerten bei Thermoplasten und erhöhter Reiß- und Druckfestigkeit bei thermoplastischen Elastomeren. Für die Konkurrenz mit anderen Werkstoffen darf die Matrixverstärkung nicht mit Verlust an Schlagzähigkeit einhergehen.

Wie beispielsweise von H.P. Schlumpf in "Taschenbuch der Kunststoff-Additive", herausgegeben von R. Gächter, H. Müller im Hanser Verlag, München 1989, 3. Auflage, S. 549ff beschrieben, ist neben Füllstofftyp und Formanisotropie besonders die Haftung zwischen dispergierten Füllstoffen und der kontinuierlichen Polymermatrix ausschlaggebend. Konventionelle Haftvermittler nutzen Grenzflächenkupplungsreaktionen, z.B. durch Reaktion von funktionalisierten Trisalkoxsilanen, die kovalente Bindungen zur Kunststoffmatrix und zum Füllstoff ausbilden.

In der DE 4405745 wurden durch Reaktionen von Oxiranen mit Dicarbonsäureanhydriden lineare, verzweigte und vernetzte Polyester an der Grenzfläche von Füllstoffen und Thermoplasten erzeugt.
Durch die Verkapselung konnte die Verstärkungswirkung und besonders die Grenzflächenadhäsion von Schichtsilikaten wie z.B. Talkum erheblich gesteigert werden.

Durch Ionenaustausch von mit organischen Ionen organophil modifizierten anorganischen Schichtverbindungen, insbesondere Zwei- und Dreischichtsilikaten der Phyllosilkate wie z.B. der Smektit-Tonerden sind bereits seit mehreren Jahrzehnten dem Fachmann bekannt.

So wurde das Grundprinzip der organophilen Modifizierung von Natrium-Montmorilloniten und Natrium-Hektoriten durch Ionenaustausch mit Alkylammonium-Ionen, die bevorzugt mindestens einen Alkylsubstituenten mit mehr als sechs Methylengruppen enthalten, bereits in von U. Hofmann (Angew. Chem. 1956, 68:53ff.) und A. Weiss (Angew. Chem. 1963, 75:113ff.) vorgestellt. Durch den Ionenaustausch wird eine Aufweitung des Schichtabstandes erzielt, die sich durch Röntgenbeugung und Transmissionselektronenmikroskopie nachweisen lassen. Durch die Organophilierung besteht die Möglichkeit, Makromoleküle zwischen die Silikatschichten zu interkalieren und durch Scherung während der Verarbeitung wesentlich kleinere anisotrope Nanopartikel zu erzeugen. Das sehr vielseitige Potential der Kunststoff- und Kautschuk-Nanocomposite, vgl. z.B. den Übersichtsartikel in C. Zilg, P. Reichert, F. Dietsche, Th. Engelhardt, R. Mülhaupt, Kunststoffe 1988, 88, 1812-1820, beinhaltet eine verbesserte Steifigkeits / Schlagzähigkeits / Wärmeformbeständigkeits -Bilanz, geringe Durchlässigkeit für Flüssigkeiten und Gase, Flammbeständigkeit, optische Transparenz.

Polyamid-Nanocomposite auf Basis von organophilen Dreischichtsilikaten (Polyamid-Nanocomposite) wurden durch Polymerisation von Aminoalkancarbonsäuren in der Gegenwart von mit protonierten Aminoalkancarbonsäuren organophilierten Montmorilloniten oder durch Schmelzcompoundieren, d.h. nachträgliches Zudosieren von organophilen Schichtsilikaten in Polymerschmelzen erhalten und sind in der WO 93/04118 der US 4'739'007, der US 4'810'734, und der US 5'385'776 beschrieben.

In der EP 846 662 werden Nanocomposite beschrieben, in denen ein exfolierbares Interkalat eingesetzt wird, das ein Alkylradikal mit wenigstens 6 C- Atomen, einen aromatischen Ring oder Gemische, das einen Oberflächenmodifikator bildet, das über funktionelle Gruppen verfügt, die mit der Kunststoffmatrix reagieren können.

Als Beispiele für matrix- kompatible Gruppen und reaktive Gruppen werden dabei Amine, Carbonsäuren, Metallcarboxylate, Hydroxygruppen, Ketone, Amide, Ether, Ester, Lactame, Aldehyde, Nitrile, Halogenverbindungen, Pyridine, Pyrrolidone, Alkene und Alkine aufgeführt. Oxirane, die in-situ Polyester- Bildung und die Herstellung von Polyolefin- Nanocompositen werden in EP 846 662 nicht beschrieben. Bevorzugte thermoplastische Matrixpolymere der EP 846 662 sind Polyamide, Polyester, Polyurethane. Während Polyamid-Nanocomposite in großer Zahl beschrieben sind, finden sich bisher nur wenige Beispiele für Polyolefin- Nanocomposite.

In der US 5'206'284 werden Polyamid-Nanocomposite mit Polypropylen gemischt, wobei Polyamid mit eingelagerten exfolierten Schichtsilikaten in der Polypropylenmatrix dispergiert wird.

Durch Zusatz eines durch Pfropfung eines unpolaren Polymers, z.B. eines thermoplastischen Elastomers mit Polydien- Blöcken, wird die Anbindung der Polyamid- Phasen an die Polypropylenmatrix erreicht. Auf diese Weise kann jedoch kein Nanosilikat in Polypropylen dispergiert werden, da Nanosiliklate ausschließlich in der dispergierten Polyamid- Phase auftreten.

Okada und Mitarbeiter (J. Appl. Polym. Sci. 1997, 63:137-139) verwendeten ein Polyolefindiol, um ein durch Ionenaustausch von Natrium-Montmorillonit mit Distearyldimethylammonium-lonen organophiliertes Dreischichtsilikat zu exfolieren und in einer Polypropylenmatrix zu dispergieren.
Mechanische Eigenschaften wurden nicht angegeben. Es ist bekannt, daß Oligomeranteile sich nachteilig auf die Schlagzähigkeit auswirken können.

In Macromolecules 1997, 30:6333-6338 beschreiben Okada und Mitarbeiter die Herstellung von Polypropylen- Nanocompositen, die in einem Schmelzcompoundierverfahren hergestellt wurden, wobei Polypropylen , Maleinsäureanhydrid- gepfropftes Oligopropen (PP-MA) und durch Ionenaustausch von Natrium-Montmorillonit mit protoniertem Stearylamin gemischt wurden. Voraussetzung für Exfolierung und Matrixverstärkung war die Mischbarkeit von Polypropylen mit PP-MA-Oligomeren. Kombinationen von Oxiranen mit carbonsäure- oder dicarbonsäureanhydrid-funktionalisierten Polypropylenen wurden nicht beschrieben.

Hier setzt die Erfindung ein, die es sich zur Aufgabe gestellt hat, Polymergemische anzugeben, die geeignet sind, sowohl Dispersion, Exfolierung als auch Grenzflächenadhäsion von durch Ionenaustausch organophil gemachte anorganische Schichtsilikate mit ionischer Schichtladung zu verbessern und während der Schmelzecompoundierung wirkungsvoll in der Polypropylenmatrix verankerte anisotrope Nanopartikel zu erzeugen. Besonderes Kennzeichen der vorliegenden Erfindung ist die in situ Herstellung von Polyestern durch Reaktion der Polycarbonsäure- bzw. Dicarbonsäureanhydridkomponente (C) mit Oxirangruppen der Komponente (D).

Erfindungsgemäß wird dies dadurch gelöst, daß die Polymergemische aus den folgenden vier Komponenten zusammengesetzt sind:
30 bis 99 Gewichtsprozent der Komponente (A), bestehend aus einem oder mehreren unpolaren oder-polaren Olefinhomo- oder copolymeren, die in der Schmelze bei Temperaturen unterhalb von 400 °C verarbeitbar sind; 1 bis 20 Gewichtsprozent der Komponente (B), bestehend aus einem oder mehreren anorganischen Füllstoffen, wobei ein, mehrere oder alle dieser anorganischen Füllstoffe durch Ionenaustausch mit organischen Ionen modifizierte anorganische Schichtverbindungen mit ionischen Schichtladungen, Längen/Durchmesser - Verhältnis > 1 und Schichtabständen größer als 1,2 nm sind; 0,1 bis 30 Gewichtsprozent der Komponente (C), bestehend aus linearen, cyclischen oder verzweigten Polycarbonsäuren mit mindestens zwei Carbonsäuregruppen oder Dicarbonsäureanhydriden, abgeleitet von Phthalsäure, Maleinsäure, Fumarsäure, Bernsteinsäure, Octenylbernsteinsäure, Dodecenylbernsteinsäure, Dimerfettsäure, Trimerfettsäure, maleinierten ungesättigten Fettsäuren und Fettsäureestem, Adipinsäure, Sebazinsäure, Ithaconsäure, Methacrylsäure, Acrylsäure, einschließlich Derivaten von olefinisch ungesättigten Fetten und Ölen; oder aus Pfropfcopolymeren, abgeleitet von ungesättigten Dicarbonsäureanhydriden oder ungesättigten Carbonsäuren, die durch Pfropfen von unpolaren oder polaren Olefinhomo- und -copolymeren mit Maleinsäureanhydrid, Ithaconsäureanhydrid, (Meth)Acrylsäure und deren Ester entstanden sind; oder aus anhydridfunktionalisierten Copolymeren wie Poly(styrol-co-maleinsäureanhydrid), Poly(ethen-co-maleinsäureanhydrid), Poly(ethen-co-1-olefin-co-maleinsäure-anhydrid), wobei 1-Olefin ein Alken *oder* ein ungesättigter (Meth)Acrylsäureester mit mehr als 4 C-Atomen ist, oder aus carbonsäurefunktionalisierten Copolymeren wie Poly(ethen-co-(meth)acrylsäure), Poly(ethen-co-1-olefin-co-(meth)acrylsäure), wobei 1-Olefin ein Alken oder ein ungesättigter (Meth)Acrylsäureester mit mehr als 4 C-Atomen ist; und 0,1 bis 30 Gewichtsprozent der Komponente (D), bestehend aus nieder- und hochmolekularen Verbindungen, die über mindestens eine Oxirangruppe verfügen, wobei Komponente (D) mit dem Modifikator der Komponente (B) oder der modifizierten Komponente (B) während der Verarbeitung reagieren kann; und wobei die Komponenten ( C) und (D) miteinander in der Schmelze der Komponente (A) in der Gegenwart der Komponente (B) zur Reaktion gebracht werden und lineare, verzweigte oder vemetzte Polyester in gewichtsprozentualen Anteilen von 0,1 bis 10 Gewichtsprozent bilden und sich an der Grenzfläche der Komponente (B) anreichern. Die Erfindung beinhaltet Verfahren zur Herstellung der erfindungsgemäßen Gemische und ihre Verwendungen für die Herstellung von Formmassen, Filmen, Folien, Fasern, Schläuchen, Klebstoffen, Lacken, Extrudaten und Sperrschichten.

Durch die erfindungsgemäße Modifizierung der Füllstoffe während der Verarbeitung kann die Haftung zwischen den Komponenten (B) und (A) sowie die Schichtseparation (Interkalation, Exfolierung) der Komponente (B) verbessert werden. Während der Verarbeitung können aus Komponente (B) wesentlich kleinere, anisotrope Nanofüllstoffe erzeugt und dispergiert werden, die im Unterschied zu Schichtsilikaten mit neutralen Schichtladungen in erheblich kleineren gewichtsprozentualen Anteilen die Eigenschaften wie Steifigkeit, Festigkeit, Wärmeformbeständigkeit, Flammbeständigkeit der erfindungsgemäßen Gemische verbessern und Gas- und Flüssigkeitsdurchlässigkeit reduzieren können.

Durch geeignete Wahl der Komponenten (C) und (D) können die Grenzschichten zwischen Komponenten (A) und (B) gezielt variiert werden, um gleichzeitig Steifigkeit und Schlagzähigkeit von gefüllten Thermoplasten zu verbessern. Die erfindungsgemäßen Zusammensetzungen eignen sich besonders für die Herstellung von Thermoplast - Nanocompositen mit in situ Erzeugung von gut dispergierten und gut an der Thermoplastmatrix haftenden anisotropen Nanopartikeln mit Partikelgrößen deutlich kleiner als 1 µm. Die separate Erzeugung und Handhabung dieser anisotropen Nanopartikeln wäre mit erheblichem Aufwand für Sicherheitsvorkehrungen verbunden, um Gesundheitsgefährdungen bei der Handhabung von anisotropen, staubähnlichen Nanopartikeln zu vermeiden.

Zudem können die beim konventionellen Einarbeiten von Nanopartikeln vielfach beobachteten und für die mechanischen Eigenschaften nachteiligen Agglomeratbildungen mit den erfindungsgemäßen Gemischen verhindert werden.
Durch Kombination der in-situ erzeugten erfindungsgemäßen Nanofüllstoffe auf Basis von ionischen anorganischen Schichtverbindungen in Kombination mit konventionellen Füllstoffen auf Basis von neutralen anorganischen Schichtverbindungen kann die Wirkung der konventionellen Füllstoffe erheblich gesteigert werden.

Besonders bevorzugte thermoplastische Komponenten (A) sind ein oder mehrere lineare oder verzweigte Polyethene, Ethen/1-Buten-, Ethen/1-Hexen-, Ethen/1-Octen-, Ethen/Styrol-, Ethen/Vinylacetat-, Ethen/Vinylalkohol- Ethen/(Meth)Acrylat -, (Meth)Acrylsäure- Copolymere mit statistischen und Block- Sequenzen, Ethen/1-Olefin- Ter und Quarterpolymere, und Blends von linearem oder verzweigtem Polyethen mit Elastomeren. Hier kann bevorzugt EP(D)M, isotaktisches, syndiotaktisches und Stereoblock- Polypropen, elastomeres Polypropylen mit Stereoblock-Mikrostruktur, eingesetzt werden . In weiteren vorteilhaften Ausführungsformen ist die Komponente (A) Polypropylen, Propen/Ethen-, Propen/1-Olefin-Copolymere, Polypropylen/EP(D)M- Blends, Polypropylen/Poly(ethen-co-1-olefin) Blends, Polypropylen/Poly(ethylen- Covinylacetat) Blends deren Zusammensetzung so gewählt wird, daß die Verarbeitung der individuellen Verbindungen oder deren Blends thermoplastisch ist.

Erfindungsgemäße Komponente (A) sind auch thermoplastische Elastomere wie Ethen/1-Octen-Copolymere mit 1-Octengehalt zwischen 8 und 40 Mol.-% und Blends aus Ethylen/Vinylacetat- Copolymeren mit Vinylacetatgehalt zwischen 5 und 65 Mol-%, kombiniert mit Dimer- und Trimerfettsäuren und epoxidiertem Sojabohnenöl. Die zahlenmittleren Molmassen der Olefinhomo- und -copolymeren variieren zwischen 20'000 und 800'000 g/mol. Bevorzugt sind Olefinhomo-und copolymere mit bimodalen Molmassenverteilungen, die weniger als 10 Gew.-% von hochmolekularen Olefinhomo- und -copolymere mit Molmassen > 700'000 g/mol enthalten. Bevorzugte gewichtsprozentuale Anteile der Komponente (A) in der Mischung von (A), (B), (C), (D) sind 50-99 Gew.-%.

Ganz besonders bevorzugte Komponenten B sind Zwei- und Dreischichtsilikate der Phyllosilikate, insbesondere der Smektitgruppe der Tonerden, Montmorillonit, Hektorit, Vermikulit die entsprechend der ionischen Schichtladung durch Ionenaustausch mit organischen Kationen organophil modifiziert sind. Organische Kationen sind protonierte primäre, sekundäre und tertiäre Amine, quartemäre Ammoniumverbindungen, protonierte basische Heterocyclen wie z.B. Imidazole mit variablen Substituenten, Amidine, Harnstoffe, Iminoether, die bevorzugt mindestens eine Alkylgruppe mit mehr als 6 C- Atomen enthalten. Bevorzugt sind Organophilierung mit Stearylamin, Aminododecansäure, 2-hdyroxyalkyl-substituerte Imidazole.

Die Komponente (B) kann vor oder während des Ionenaustauschs mit Polycarbonsäuren, Polyphosphorsäuren, wasserlöslichen Polymeren, z.B. Polyvinylalkohol, Polyethylenoxid, Vinylpyrrolidonhomo- und -copolymeren, Stärke, Dextrine, Dextrin- und Zuckerderivate, Aminozucker sowie mit ionischen und nicht- ionischen Tensiden, z.B. ethoxyliertes Nonylphenol, ethoxylierte Fettalkohole, modifiziert werden. Vertreter, der anionenaustauschfähigen Zweischichtsilikate sind Hydrotalcite die durch Ionenaustausch mit organischen Anionen organophil gemacht werden.

Bevorzugte organische Kationen sind Metallsalze von aromatischen, aliphatischen, araliphatischen und cycloaliphatischen Carbonsäuren, Sulfonsäuren, Phosphorsäuren, die bevorzugt mindestens einen Alkylsubstituenten mit mehr als 6 C- Atomen aufweisen. Der gewichtsprozentuale Anteil der Komponente (B) am Gemisch aus (A), (B), (C) und (D) kann zwischen 1 und 20 Gewichtsprozent betragen.
Teil der erfindungsgemäßen Komponenten (B) sind Mischungen aus einer oder mehreren anorganischen Schichtverbindungen ohne Schichtladung, also neutral mit einer oder mehreren durch Ionenaustausch organophil modifizierten ionischen Schicht, Schichtverbindungen mit anionischen oder kationischen Schichtladungen, ganz besonders bevorzugt sind Mischungen aus Talk und durch Kationenaustausch organophil modifizierten Schichtsilikate, wobei der Gehalt an organophilem Schichtsilikat bezogen auf den Gesamtsilikatgehalt 0,1 bis 10 Gewichtsprozent beträgt.

Besonders bevorzugt sind Gemische, in denen der ionische Modifikator der ionenaustauschfähigen anorganischen Schichtverbindungen von Komponente (B) ein protoniertes, sekundäres oder tertiäres Amin, eine protonierte basische Heteroatomverbindung oder eine quartemäre Ammoniumverbindung ist, die als Substituenten über mindestens eine Alkyl oder funktionalisierte Alkylgruppe mit mehr als 6 Methylengruppen verfügt.

Den erfindungsgemäßen Gemischen können eine Reihe weiterer Verbindungen zugesetzt werden, z.B. Antioxidantien wie sterisch gehinderte Phenole, sterisch gehinderte Amine, Lactone, Lichtschutzmittel, Weichmacher, Füllstoffe wie z.B. Magnesiumhydroxyid, Calciumcarbonat, Haftvermittler wie z.B. funktionalisierte Silane, Keimbildner, Treibmittel, Flammschutzmittel, optische Aufheller, Farbstoffe, Pigmente, Metallsalze, Komplexbildner, Lang- und Kurzfasem, Gleitmittel, usw.

Weiterhin vorteilhaft ist, daß der ionische Modifikator mindestens eine zusätzliche, mit Komponenten (C) und (D) zur Reaktion fähige funktionelle Gruppe trägt.

Pfropfcopolymere werden in dem Fachmann bekannten Verfahren, z.B. durch die Schmelzreaktion von Olefinhomo- und -copolymeren mit Malein-oder Ithaconsäureanhydrid in der Gegenwart von Radikalen hergestellt.
Polycarbonsäuren können auch durch Polykondensation von Polycarbonsäuren mit Di- und Polyolen mit Carbonsäure/hydroxy-Molverhältnis größer als 1 hergestellt werden. Beispiele dafür sind Polykondensate aus Diolen wie Hexandiol, Butandiol, Neopentylglykol, Oligotetrahadrofuran (zahlenmittlere Molmasse von 400 bis 5000 g/mol) mit Di- und Polycarbonsäuren, ganz besonders bevorzugt ist Dimer- und Trimerfettsäure.

Für die Quellung der Komponente (B) durch die Komponente (C) ist eine Alkylsubstution mit Alkylgruppen, die mehr als 6C Atome aufweisen oder von pflanzlichen und tierischen Fetten und Ölen abgeleitet ist. Bevorzugte Derivate pflanzlicher und tierischer Fette und Öle, enthaltend maleinierte einfach oder mehrfach ungesättigte Fettsäuerester.

Es ist dem Fachmann bekannt, daß die Maleinierung bei erhöhten Temperaturen über Diels- Alder- und En- Reaktionen erfolgen kann. Diese Reaktion kann auch durch in-situ Reaktionen mit olefinisch ungesättigten Modifikatoren der Komponente (A) und Maleinsäureanhydrid erfolgen.
Bevorzugter gewichtsprozentualer Anteil der Komponente (C) ist 0.1 bis 30 Gewichtsprozent der Komponente (C), bezogen auf die Mischung von (A), (B), (C) und (D).

Oxirane können in dem Fachmann bekannten Verfahren durch Oxidation von linearen und cyclischen Olefinen, durch Reaktion von Hydroxy -, Phenol-, Amin, Amid - und Carbonsäuregruppen mit Epichlorhydrin oder durch partielle Umsetzungen von Polyoxiranen mit H-aciden Verbindungen, z.B. Phenolen und Carbonsäuren, hergestellt werden.
Bevorzugt sind teilweise oder vollständig epoxidierte olefinisch ungesättigte Fettsäuren, Fettalkohole, Fette, Öle und deren Derivate. Besonders bevorzugt sind epoxidertes Sojabohnenöl und Derivate der Epoxidharze auf Basis von Bisphenol A und hydriertem Bisphenol A, die durch Reaktion mit Phenolen und Carbonsäuren, die Alkylsubstituenten mit mindestens 6C Atomen enthalten, modifiziert wurden. Beispiele für diese Modifikatoren sind Stearinsäure und der Stearylalkoholester der p- Hydroxybenzoesäure. Ganz besonders bevorzugt sind niedermolekulare Oxiran- und (Meth)Acrylat- funktionalisierte Verbindungen mit mindestens einer Alkylgruppe mit mehr als 6 C- Atome. Des weiteren sind bevorzugt oxiranfunktionalisiere Derivate der Acryl- und Methacrylsäure, z.B. Glycidylmethacrylat, Derivate von epoxidierten Fetten und Ölen, die partiell oder vollständig mit (Meth)acrylsäure umgesetzt werden, durch Adduktbildung von Glycidyl(meth)acrylat mit langkettigen Carbonsäuren mit mehr als 6 C-Atomen hergestellte Hydroxyester sowie durch Reaktion von ein- oder polyoxiran- funktionalisierten Verbindungen mit Carbonsäuren mit mehr als 6C Atomen und Veresterung mit (Eth)Acrylsäure bzw. Umesterung mit (Meth)Acrylsäureestern.

Verwendet man die oben beschriebenen (Meth)acryl-Oxiran-Verbindungen besteht die Möglichkeit, die Menge an Komponente (D) erheblich zu reduzieren.
Die Erfindung lehrt weiterhin, daß eine oder mehrere Mono-, Di- oder Trialkoxysilan-Verbindungen zu den verschiedenen Komponenten zugesetzt werden.

Die Reaktion der Komponenten (C) und (D) bzw. der Komponente (C) und/oder der Komponenten (D) mit dem organischen Modifikator der Komponente (B) werden in der Schmelze der Komponente (A) bei Temperaturen unterhalb von 400 °C, wobei bevorzugt das Molverhältnis von Oxiran zu Carbonsäure bzw. Dicarbonsäureanhydrid zwischen 0,1 und 10, besonders bevorzugt 0,1 bis 5, variieren kann.

Im Verfahren zur Herstellung derartiger Verbindungen werden Reaktionsbeschleuniger zugesetzt, welche bevorzugt aus Imidazolen, Organophosphorverbindungen oder Metallkomplexen bestehen

Die erfindungsgemäßen Gemische finden bevorzugt Verwendung für die Herstellung von Formmassen, Filmen, Folien, Fasern, Schläuchen, Klebstoffen, Lacken, Extrudaten und Sperrschichten.

### Beispiele

### Herstellung und Charakterisierung der erfindungsgemäßen Mischungen und Vergleichsbeispiele:

Als Polymer diente Polypropylen (PP mit MFI (230/2,16) = 3.2 g/10min, Tₘ = 166 °C), maleinsäureanhydrid gepfropftes Polypropylen ( PP-gMA Mn = 8800, Tₘ = 160, Anhydridfunktionalität: 2,9 Gew.-%). Als Schichtsilikate wurden ein modifizierter natürlich vorkommender Bentonit (BE) und ein modifizierter, synthetischer Bentonit (SB) eingesetzt. Als Epoxidkomponenten dienten epoxidiertes Sojabohnenöl (ESO) und Glycidylmethacrylat (GMA). Die Füllstoffe wurden bei T = 60 °C im Umlufttrockenschrank über 24 Stunden vorgetrocknet. Herstellung von SB/ODA:
Kationenaustausch der Zwischenschichtkationen des synthetischen Schichtsilikates: In einem 20 l Reaktor wurden 646 g (2,4 mol) Octadecylamin und 240 ml konz. HCl (2,9 mol) in ca. 20 l Wasser gelöst. Diese Lösung wurde auf 80 °C erwärmt und anschließend 1 kg des synthetischen Bentonits unter Rühren zugegeben.

Das gequollene Schichtsilikat wurde nach 20 min Reaktionsdauer mit Hilfe einer Filterpresse von der überstehenden Lösung abgetrennt und anschließend mit ca. 100 l heißen Wasser gewaschen. Der Filterkuchen wurde 48h bei 80 °C im Umlufttrockenschrank getrocknet. Das entstehende Produkt SB/ODA weist einen Schichtabstand von 1,96 nm auf.
Bei BE/DMDSA handelt es sich um einen natürlichen Bentonit, der mit Dimethyldistearylammoniumchlorid modifiziert wurde und der einen Schichtabstand von 3,3 nm aufweist.

### Herstellung des Glycidymethacrylat modifizierten BE/DMDSA und der Composites:

Zu 200 g BE/DMDSA wurden 60 g GMA (entspricht 30% der Masse des eingesetzten Schichtsilikates (BE/DMDSA 30G)) gegeben und 15 min gerührt. Das erhaltene Pulver ließ sich problemlos mit den Feststoffdosiereinheiten des Extruders dosieren.
Zur Herstellung der Composites mit PP-g-MA wurden die Komponenten getrennt dosiert, wobei der PP-g-MA Anteil bei 20% gehalten wurde. Die Zugabe des ESO erfolgte unter gravimetrischer Kontrolle.

Alle Mischungen wurden in einem Extruder bei einer Schmelzeaustrittstemperatur von 210 - 240° C und einem Durchsatz von 5 kg/h durchgeführt. Bei der Extrusion wurde vor dem Schmelzeaustritt ein Vakuum von ca. 5 mbar angelegt, um eventuell entstehende niedermolekulare Nebenprodukte oder Verunreinigungen abzuziehen. Das Extrudat wurde granuliert, 1h bei 60 °C im Umlufttrockenschrank getrocknet und anschließend mit einer Spritzgußmaschine zu Probenkörpern spritzgegossen. Mit einem Zugprüfgerät wurden gemäß DIN 53455 Prüfkörper vermessen, um aus den Zug- Dehnungskurven den Elastizitätsmodul, die Fließspannung und die Reißdehnung zu bestimmen. Die Kerbschlagzähigkeit (KSZ) wurde nach IZOD bestimmt. Die verwendeten Formulierungen sind unten und die erhaltenen Eigenschaften in Tabelle 1 aufgeführt.

| Vergleichsbeispiel V1 | Vergleichsbeispiel V2 | Vergleichsbeispiel V3 |
|---|---|---|
| 75 Teile PP | 75 Teile PP | 95 Teile PP |
| 20 Teile PP-gMA | 20 Teile PP-gMA | 3,85 Teile SB/ODA |
| 5 Teile BE/DMDSA | 5 Teile SB/ODA | 1,15 Teile GMA |

| Beispiel 1 | Beispiel 2 | Beispiel 3 |
|---|---|---|
| 75 Teile PP | 73 Teile PP | 75 Teile PP |
| 20 Teile PP-gMA | 20 Teile PP-gMA | 20 Teile PP-gMA |
| 3,85 Teile BE/DMDSA | 5 Teile BE/DMDSA | 3,85 Teile SB/ODA |
| 1,15 Teile GMA | 2 Teile ESO | 1,15 Teile GMA |

| Beispiel 4 | Beispiel 5 |
|---|---|
| 73 Teile PP | 68 Teile PP |
| 20 Teile PP-gMA | 20 Teile PP-gMA |
| 5 Teile SB/ODA | 10 Teile SB/ODA |
| 2 Teile ESO | 2 Teile E50 |

**Tabelle 1:**

| Mechanische Eigenschaften der PP Composites: | | | | | | | | | |
|---|---|---|---|---|---|---|---|---|---|
| Bsp. NR. | Komponente B TYP | Komponente B (Gew.-%) | Komponente C TYP | Komponente C (Gew.-%) | Komponente D TYP | Komponente D (Gew.-%) | KSZ (kJ/m²) | E-Modul (MPa) | Fließspannung (Mpa) |
| V1 | PP-g-MA | 20 | BE/DMDSA | 5 | - | - | 1,0 | 1830 | 32,5 |
| V2 | PP-g-MA | 20 | SB/ODA | 5 | - | - | 1,2 | 2100 | 36,1 |
| V3 | - | - | BE/DMDSA | 3.85 | GMA | 1,15 | 10,5 | 1560 | 33,1 |
| 1 | PP-g-MA | 20 | BE/DMDSA | 3,85 | GMA | 1,15 | 2,3 | 1900 | 33,6 |
| 2 | PP-g-MA | 20 | BE/DMDSA | 5 | ESO | 2 | 2.1 | 1950 | 33,8 |
| 3 | PP-g-MA | 20 | SB/ODA | 3,85 | GMA | 1,15 | 1,4 | 2460 | 36,6 |
| 4 | PP-g-MA | 20 | SB/ODA | 5 | ESO | 2 | 1,2 | 2520 | 36,7 |
| 5 | PP-g-MA | 20 | SB/ODA | 10 | ESO | 2 | 1,1 | 3090 | 37,4 |

## Patentansprüche

1. Thermoplastisch verarbeitbare Polyolefine und durch Ionenaustausch organophil modifizierte anorganische Füllstoffe enthaltende Polymergemische,
**dadurch gekennzeichnet,**
**daß** sie mindestens aus den folgenden vier Komponenten zusammengesetzt sind:
30 bis 99 Gewichtsprozent der Komponente (A), bestehend aus einem oder mehreren unpolaren oder polaren Olefinhomo- oder copolymeren, die in der Schmelze bei Temperaturen unterhalb von 400 °C verarbeitbar sind;
1 bis 20 Gewichtsprozent der Komponente (B), bestehend aus einem oder mehreren anorganischen Füllstoffen, wobei ein, mehrere oder alle dieser anorganischen Füllstoffe durch Ionenaustausch mit organischen Ionen modifizierte anorganische Schichtverbindungen mit ionischen Schichtladungen, Längen/Durchmesser- Verhältnis > 1 und Schichtabständen größer als 1,2 nm sind;
0,1 bis 30 Gewichtsprozent der Komponente (C), bestehend aus linearen, cyclischen oder verzweigten Polycarbonsäuren mit mindestens zwei Carbonsäuregruppen oder Dicarbonsäureanhydriden, abgeleitet von Phthalsäure, Maleinsäure, Fumarsäure, Bernsteinsäure, Octenylbemsteinsäure, Dodecenylbemsteinsäure, Dimerfettsäure, Trimerfettsäure, maleinierten ungesättigten Fettsäuren und Fettsäureestem, Adipinsäure, Sebazinsäure, Ithaconsäure, Methacrylsäure, Acrylsäure, einschließlich Derivaten von olefinisch ungesättigten Fetten und Ölen; oder aus Pfropfcopolymeren, abgeleitet von ungesättigten Dicarbonsäureanhydriden oder ungesättigten Carbonsäuren, die durch Pfropfen von unpolaren oder polaren Olefinhomo- und -copolymeren mit Maleinsäureanhydrid, Ithaconsäureanhydrid, (Meth)Acrylsäure und deren Ester entstanden sind; oder aus anhydridfunktionalisierten Copolymeren wie Poly(styrol-co-maleinsäureanhydrid), Poly(ethenco-maleinsäureanhydrid), Poly(ethen-co-1-olefin-co-maleinsäure-anhydrid), wobei 1-Olefin ein Alken *oder* ein ungesättigter (Meth)Acrylsäureester mit mehr als 4 C-Atomen ist; oder aus carbonsäurefunktionalisierten Copolymeren wie Poly(ethen-co-(meth)acrylsäure), Poly(ethen-co-1-olefin-co-(meth)acrylsäure), wobei 1-Olefin ein Alken oder ein ungesättigter (Meth)Acrylsäureester mit mehr als 4-Atomen ist; und 0,1 bis 30 Gewichtsprozent der Komponente (D), bestehend aus nieder- und hochmolekularen Verbindungen, die über mindestens eine Oxirangruppe verfügen, wobei Komponente (D) mit dem Modifikator der Komponente (B) oder der modifizierten Komponente (B) während der Verarbeitung reagieren kann; und wobei die Komponenten ( C) und (D) miteinander in der Schmelze der Komponente (A) in der Gegenwart der Komponente (B) zur Reaktion gebracht werden und lineare,. verzweigte oder vernetzte Polyester in gewichtsprozentualen Anteilen von 0,1 bis 10 Gewichtsprozent bilden und sich an der Grenzfläche der Komponente (B) anreichem.

2. Gemische nach Anspruch 1, **dadurch gekennzeichnet, daß** Komponente (A) thermoplastisch verarbeitbar und ein oder mehrere lineare oder verzweigte Polyethene, Ethen/1-Buten-, Ethen/1-Hexen-, Ethen/1-Octen-, Ethen/Styrol-, Ethen/Vinylacetat-, Ethen/Vinylalkohol, Ethen/(Meth)Acrylat-, Ethen/(Meth)Acrylat/(Meth)Acrylsäure-Copolymere, Ethen/1-Olefin- Ter- und Quarterpolymere, und Blends von linearem oder verzweigtem Polyethen mit Elastomeren ist.

3. Gemische nach Anspruch 1, **dadurch gekennzeichnet, daß** Komponente (A) Polypropen, Propen/Ethen-, Propen/1-Olefin-Copolymere, Polypropylen/EP(D)M-Blends, Polypropylen/Poly(ethen-co-1-olefin) Blends, Polypropylen/Polyethen-covinylacetat) Blends ist.

4. Gemische nach Anspruch 1, **dadurch gekennzeichnet, daß** Komponente (B) ein oder mehrere Zwei- und Dreischichtsilikate wie Montmorillonit, Hektorit, Hydrotalcit, Vermikulit sind, die entsprechend ihrer ionischen Schichtladung durch Ionenaustausch mit Ammonium- oder Carboxylationen organophil modifiziert sind.

5. Gemische nach Anspruch 1, **dadurch gekennzeichnet, daß** Komponente (B) aus einer Mischung aus einer oder mehreren anorganischen Schichtverbindungen ohne Schichtladung mit ein oder mehreren durch Ionenaustausch organophil modifizierten Schichtverbindungen mit anionischen oder kationischen Schichtladungen besteht.

6. Gemische nach Anspruch 1, **dadurch gekennzeichnet, daß** der ionische Modifikator der ionenaustauschfähigen anorganischen Schichtverbindungen von Komponente (B) ein protoniertes primäres, sekundäres oder tertiäre Amin, eine protonierte basische Heteroatomvebindung oder eine quarternäre Ammoniumverbindung ist, die als Substituenten über mindestens eine Alkyl oder funktionalisierte Alkylgruppe mit mehr als sechs Methylengruppen verfügt.

7. Gemische nach Anspruch 6, **dadurch gekennzeichnet, daß** der ionische Modifikator mindestens eine zusätzliche, mit Komponenten (C ) und (D) zur Reaktion fähige funktionelle Gruppe trägt.

8. Gemische nach Anspruch 1, **dadurch gekennzeichnet, daß** Komponente ( C) ein mit Maleinsäureanhydrid gepfropftes Homo- oder Copolymer von 1-Olefinen ist.

9. Gemische nach Anspruch 1, **dadurch gekennzeichnet, daß** Komponente (D) ein olefinisch ungesättigtes, polymerisationsfähiges Oxiran auf Basis von (Meth)Acrylsäurederivaten ist.

10. Gemische nach Anspruch 1, **dadurch gekennzeichnet, daß** Komponente (D) ein durch partielle oder vollständige Epoxidierung gebildetes Derivat von olefinisch ungesättigten pflanzlichen oder tierischen Ölen und Fetten ist.

11. Gemische nach Anspruch 1, **dadurch gekennzeichnet, daß** Komponente (D) ein Pfropfcopolymer, hergestellt durch Pfropfen eines Olefinhomo- und Copolymers mit einem oxiran-funktionalisierten Derivat der (Meth)Acrylsäure ist.

12. Gemische nach den Ansprüchen 1-11, **dadurch gekennzeichnet, daß** eine oder mehrere Mono-, Di- oder Trialkoxysilan- Verbindungen zu den Komponenten zugesetzt werden.

13. Verfahren zur Herstellung von Gemischen nach den Ansprüchen 1-12, **dadurch gekennzeichnet, daß** zu einem Gemisch aus (A) und (B) die Komponenten (C) und (D) gegeben werden, wobei das Molverhältnis von Oxiran zu Carbonsäure bzw. Dicarbonsäureanhydrid zwischen 0,1 und 10,0 variieren kann.

14. Verfahren zur Herstellung von Gemischen nach den Ansprüchen 1-12 **dadurch gekennzeichnet, daß** Reaktionsbeschleuniger, bestehend aus Imidazolen, Organophosphorverbindungen oder Metallkomplexe zugesetzt werden.

15. Verwendungen von Gemischen nach den Ansprüchen 1-12 für die Herstellung von Formmassen, Filmen, Folien, Fasern, Schläuchen, Klebstoffen, Lacken, Extrudaten und Sperrschichten.

## Claims

1. Polyolefines capable of thermoplastic processing and polymer mixtures containing inorganic fillers organophilically modified by ion exchange, **characterised by**:
they consist of at least the following four components:
30 to 99 percent by weight of component (A), consisting of one or more unipolar or polar olefin homopolymers or copolymers which can be processed in molten form at temperatures below 400 °C;
1 to 20 percent by weight of component (B), consisting of one or more inorganic fillers, of which one, several or all of these inorganic fillers are modified by ion exchange with organic ions, with inorganic layer bonds with ionic layer charges, length/diameter ratio > 1 and layer intervals greater than 1.2 nm;
0.1 to 30 percent by weight of component (C), consisting of linear, cyclic or branched polycarbonic acids with at least two carbonic acid groups or dicarbonic acid anhydrides, derived from phthalic acid, maleic acid, fumaric acid, succinic acid, octenyl succinic acid, dodecenyl succinic acid, dimeric fatty acid, trimeric fatty acid, maleinated, unsaturated fatty acids and fatty acid esters, adipinic acid, sebacic acid, ithaconic acid, methacrylic acid, acrylic acid, including derivatives of olefine unsaturated fats and oils; or of grafted copolymers, derived from unsaturated dicarbonic acid anhydrides or unsaturated carbonic acids created by grafting from non-polar or polar olefine homopolymers and copolymers with maleic anhydride, ithaconic acid anhydride, (meth)acrylic acid and its esters; or of anhydride functionalised copolymers such as poly(styrene-co-maleic anhydride), poly(ethene-co-maleic anhydride), poly(ethene-co-1-olefine-co-maleic anhydride), in which 1-olefine is an alkene or an unsaturated (meth)acrylic acid ester with more than 4 C atoms; or of carbonic acid-functionalised copolymers such as poly(ethene-co-(meth)acrylic acid), poly(ethene-co-1-olefine-co-(meth)acrylic acid), in which 1-olefin is an alkene or an unsaturated (meth)acrylic acid ester with more than 4 C atoms; and 0.1 to 30 percent by weight of component (D), consisting of low and high molecular compounds with at least one oxirane group. Component (D) can react with the modifier of component (B) or the modified component (B) during processing and components (C) and (D) react with each other in the molten component (A) in the presence of component (B) and form linear, branched or crosslinked polyester ratios of 0.1 to 10 percent by weight and which accumulate at the boundary layer of component (B).

2. Mixtures according to Claim 1, **characterised by**: component (A) is capable of thermoplastic processing and is one or more linear or branched polyethene, ethene/1-butene, ethene/1-hexene, ethene/1-octene, ethene/styrene, ethene/vinyl acetate, ethene/vinyl alcohol, ethen/(meth)acrylate, ethene/(meth)acrylate/ (meth)acrylic copolymers, ethene/1-olefine terpolymers and quarterpolymers, and blends of linear or branched polyethene with elastomers.

3. Mixtures according to Claim 1, **characterised by**: component (A) is polypropene, propene/ethene, propene/1-olefine-copolymers, polypropylene/EP(D)M blends, polypropylene/poly(ethene-co-1-olefine) blends, polypropylene/polyethene-co-vinyl acetate) blends.

4. Mixtures according to Claim 1, **characterised by**: component (B) is one or more two and three-layer silicates such as montmorillonite, hectorite, hydrotalcite, vermiculite, which are organophilically modified according to their ionic layer charges by ion exchange with ammonium or carboxylate ions.

5. Mixtures according to Claim 1, **characterised by**: component (B) consists of a mixture of one or more inorganic layer bonds without layer charges with one or more layer bonds organophilically modified by ion exchange with anionic or cationic layer charges.

6. Mixtures according to Claim 1, **characterised by**: the ionic modifier of the inorganic layer bonds of component (B) which are capable of ion exchange is a proton enriched primary, secondary or tertiary amine, a proton enriched, alkaline heteroatomic compound or a quartiary ammonium compound which has at least one alkyl or functionalised alkyl group with more than six methylene groups as the substitutor.

7. Mixtures according to Claim 6, **characterised by**: the ionic modifier bears at least one additional functional group capable of reacting with components (C ) and (D).

8. Mixtures according to Claim 1, **characterised by**: component ( C) is a homopolymer or copolymer of 1-olefines grafted to maleic acid anhydride.

9. Mixtures according to Claim 1, **characterised by**: component (D) is an olefine unsaturated oxirane capable of polymerisation based on (meth)acrylic acid derivatives.

10. Mixtures according to Claim 1, **characterised by**: component (D) is a derivative of olefine unsaturated vegetable or animal oils and fats formed by partial or complete epoxidisation.

11. Mixtures according to Claim 1, **characterised by**: component (D) is a grafted copolymer manufactured by grafting an olefine homopolymer and copolymer with an oxirane functionalised derivative of (meth)acrylic acid.

12. Mixture according to Claims 1-11, **characterised by**: one or more mono, di or trialkoxysilane compounds are added to the components.

13. Process to manufacture mixtures according to Claims 1-12, **characterised by**: components (C) and (D) are added to a mixture of (A) and (B), in which the mol ratio of oxirane to carbonic acid or dicarbonic acid anhydride can vary between 0.1 and 10.0.

14. Process to manufacture mixtures according to Claims 1-12, **characterised by**: catalysts consisting of imidazoles, organic phosphor compounds or metal complexes are added.

15. Employment of mixtures according to Claims 1-12 to manufacture moulding compounds, films, foils, fibres, tubes, adhesives, lacquers, extruded products and barrier layers.

## Revendications

1. Polyoléfine manipulable thermoplastiquement et mélanges de polymères contenant des charges inorganiques modifiées par échange d'ions et ainsi rendues organophiles,
**se caractérisant par le fait**
**qu'**ils se composent, au minimum, des quatre constituants suivants :
30 à 99 pour cent en masse du constituant (A), composé d'un ou plusieurs homopolymères ou copolymères d'oléfine, non polaires ou polaires, manipulables en milieu fondu à des températures inférieures à 400 °C ;
1 à 20 pour cent en masse du constituant (B), composé d'une ou plusieurs charges inorganiques - une, plusieurs ou encore la totalité de ces charges inorganiques étant des composés inorganiques en forme de feuilles, avec des charges foliaires ioniques, modifiés par échange d'ions avec des ions organiques, le rapport longueurs/diamètres étant > 1 et la distance d'un feuillet à l'autre supérieure à 1,2 nm ;
0,1 à 30 pour cent en masse du constituant (C), composé d'acides polycarboxyliques linéaires, cycliques ou ramifiés avec au moins deux groupes d'acide carboxylique ou deux anhydrides d'acide dicarboxylique, dérivés de l'acide phtalique, de l'acide maléique, de l'acide fumarique, de l'acide succinique, de l'acide succinique-octényl, de l'acide succinique-dodécényl, de l'acide gras dimérisé, de l'acide gras trimérisé, d'acides gras insaturés modifiés avec un acide maléique et d'esters d'acide gras, de l'acide adipique, de l'acide sébacique, de l'acide itaconique, de l'acide méthacrylique, de l'acide acrylique, de dérivés de graisses ou d'huiles oléfiniquement insaturées ;
ou composé de copolymères greffés, dérivés d'anhydrides d'acide dicarboxylique insaturés ou d'acides carboxyliques insaturés qui se sont formés par greffage d'homopolymères et de copolymères d'oléfine, non polaires ou polaires, avec un anhydride d'acide maléique, un anhydride d'acide itaconique, un acide (méth)acrylique et leurs esters ;
ou composé de copolymères ayant la fonction d'un anhydride comme le poly(styrène-co-anhydride d'acide maléique), le poly(éthène-co-anhydride d'acide maléique), le poly(éthène-co-1-oléfine-co-anhydride d'acide maléique)-1-oléfine étant un alcène ou un ester d'acide (méth)acrylique insaturé avec plus de 4 atomes C ;
ou composé de copolymères ayant la fonction d'un acide carboxylique comme le poly(éthène-co-acide (méth)acrylique), le poly(éthène-co-1-oléfine-co-acide (méth)acrylique) - 1-oléfine étant un alcène ou un ester d'acide (méth)acrylique insaturé avec plus de 4 atomes C ;
et 0,1 à 30 pour cent en masse du constituant (D), formé de composés de masse moléculaire faible et élevée, comprenant au moins un groupe d'oxyranes ― le constituant (D) pouvant réagir avec le modificateur du constituant (B) ou le constituant (B) modifié pendant la mise en oeuvre ;
les constituants (C) et (D) étant mis ensemble en réaction dans le milieu fondu du constituant (A) en présence du constituant (B), formant des polyesters linéaires, ramifiés ou réticulés suivant un rapport massique de 0,1 à 10 pour cent en masse et s'enrichissant à l'interface du constituant (B).

2. Mélanges selon la revendication n°1, **se caractérisant par le fait que** le constituant (A) est manipulable thermoplastiquement et qu'il est un ou plusieurs polythènes linéaires ou ramifiés ou un copolymère d'éthène/1-butène, d'éthène/1-hexène, d'éthène/1-octène, d'éthène/styrène, d'éthène/acétate de vinyle, d'éthène/alcool de vinyle, d'éthène/(méth)acrylate, d'éthène/(méth)acrylate/acide (méth)acrylique, un ter- et quaterpolymère d'éthène/1-oléfine ou des mélanges de polythènes linéaires ou ramifiés avec des élastomères.

3. Mélanges selon la revendication n°1, **se caractérisant par le fait que** le constituant (A) est un polypropène, un copolymère de propène/éthène, un copolymère de propène/1-oléfine, des mélanges de polypropylène/EP(D)M, des mélanges de polypropylène/poly(éthène-co-1-oléfine), des mélanges de polypropylène/poly(éthène-co-acétate de vinyle).

4. Mélanges selon la revendication n°1, **se caractérisant par le fait que** le constituant (B) est un ou plusieurs silicates à deux et à trois feuillets comme la montmorillonite, l'hectorite, l'hydrotalcite et la vermiculite qui, conformément à leur charge foliaire ionique, sont modifiés par échange d'ions avec des ions ammoniums ou des ions carboxylates et ainsi rendus organophiles.

5. Mélanges selon la revendication n°1, **se caractérisant par le fait que** le constituant (B) se compose d'un mélange d'un ou plusieurs composés inorganiques en forme de feuilles sans charge foliaire avec un ou plusieurs composés en forme de feuilles, avec des charges foliaires anioniques ou cationiques, modifiés par échange d'ions et ainsi rendus organophiles.

6. Mélanges selon la revendication n°1, **se caractérisant par le fait que** le modificateur ionique des composés inorganiques en forme de feuilles du constituant (B), capables de réaliser l'échange d'ions, est une amine primaire, secondaire ou tertiaire protonée, un composé d'hétéroatome basique protoné ou un composé d'ammonium quaternaire, qui comprend en tant que substituant au moins un alkyle ou un groupe d'alkyle fonctionnalisé avec plus de six groupes de méthylène.

7. Mélanges selon la revendication n°6, **se caractérisant par le fait que** le modificateur ionique comporte au moins un groupe fonctionnel supplémentaire capable de réagir avec les constituants (C) et (D).

8. Mélanges selon la revendication n°1, **se caractérisant par le fait que** le constituant (C) est un homopolymère ou un copolymère d'1-oléfine greffé avec un anhydride d'acide maléique.

9. Mélanges selon la revendication n°1, **se caractérisant par le fait que** le constituant (D) est un oxyrane polymérisable oléfiniquement insaturé sur la base de dérivés d'acide (méth)acrylique.

10. Mélanges selon la revendication n°1, **se caractérisant par le fait que** le constituant (D) est un dérivé d'huiles et de graisses végétales ou animales oléfiniquement insaturées formé par une époxydation partielle ou totale.

11. Mélanges selon la revendication n°1, **se caractérisant par le fait que** le constituant (D) est un copolymère greffé, fabriqué par greffage d'un homopolymère et d'un copolymère d'oléfine avec un dérivé de l'acide (méth)acrylique ayant la fonction d'un oxyrane.

12. Mélanges selon les revendications n° 1-11, **se caractérisant par le fait qu'**un ou plusieurs composés de mono-, di- ou trialkoxysilane sont rajoutés aux constituants.

13. Le procédé de fabrication des mélanges selon les revendications n°1 à 12 se **caractérise par le fait que** l'on ajoute à un mélange de (A) et (B) les constituants (C) et (D) - le rapport molaire oxyrane/acide carboxylique ou oxyrane/anhydride d'acide dicarboxylique pouvant varier entre 0,1 et 10,0.

14. Le procédé de fabrication des mélanges selon les revendications n°1 à 12 se **caractérise par le fait que** l'on ajoute des accélérateurs de réaction, constitués d'imidazoles, de composés organophosphoriques ou de complexes métalliques.

15. Utilisation des mélanges selon les revendications n°1 à 12 pour la fabrication de matières moulables, de films, de feuilles, de fibres, de tuyaux souples, de colles, de vernis, de produits d'extrusion et de couches imperméables.
